(19) Europäisches Patentamt
European Patent Office
Office européen des brevets

(11) **EP 4 756 959 A1**

(12) **EUROPEAN PATENT APPLICATION**
published in accordance with Art. 153(4) EPC

(43) Date of publication:
**10.06.2026 Bulletin 2026/24**

(21) Application number: **24873010.3**

(22) Date of filing: **26.09.2024**

(51) International Patent Classification (IPC):
*H01M 10/052* (2010.01)     *H01M 50/105* (2021.01)
*H01M 50/126* (2021.01)     *H01M 10/0566* (2010.01)

(52) Cooperative Patent Classification (CPC):
**H01M 10/052; H01M 10/0566; H01M 50/105;
H01M 50/126;** Y02E 60/10

(86) International application number:
**PCT/KR2024/014655**

(87) International publication number:
**WO 2025/071302 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023  KR 20230129853**

(71) Applicant: **LG Energy Solution, Ltd.
Seoul 07335 (KR)**

(72) Inventors:
• **KIM, Il Hong
  Daejeon 34122 (KR)**
• **LEE, Seo Yeong
  Daejeon 34122 (KR)**
• **HONG, Sung Won
  Daejeon 34122 (KR)**

(74) Representative: **Plasseraud IP
104 Rue de Richelieu
CS92104
75080 Paris Cedex 02 (FR)**

(54) **LITHIUM SECONDARY BATTERY**

(57)     The present invention relates to a secondary battery which is excellent in impact resistance, and the secondary battery according to the present invention includes an electrode assembly having a positive electrode, a negative electrode, and a separator disposed between the positive electrode and the negative electrode; an electrolyte; and a battery case accommodating the electrode assembly and the electrolyte, and the secondary battery satisfies Expression (1) below.

$$\text{Expression (1):} \quad V_p + 0.1 \times C/D_e \leq V_e \leq V_p + 0.15 \times C/D_e$$

In Expression (1) above, $V_e$ is a total volume (mL) of the electrolyte included in the lithium secondary battery, $V_p$ is a total pore volume (mL) of the electrode assembly, C is a battery capacity (Ah), and $D_e$ is an electrolyte density (g/mL).

EP 4 756 959 A1

**(Cont. next page)**

FIG. 1

Description

## TECHNICAL FIELD

This application claims priority from Korean Patent Application No. 10-2023-0129853, filed on September 26, 2023, the disclosure of which is incorporated by reference herein.

The present invention relates to a lithium secondary battery, and more particularly to a lithium secondary battery having reduced electrolyte leakage when a battery case is damaged.

## BACKGROUND ART

A lithium secondary battery is generally prepared in a method where electrode active material slurries are applied onto a positive electrode current collector and a negative electrode current collector to prepare a positive electrode and a negative electrode, respectively, and the electrodes are respectively stacked in one and the other sides of a separator to form an electrode assembly in a certain shape, then the electrode assembly is accommodated in a pouch, and an electrolyte is injected thereto.

The secondary battery is classified into a pouch type, a can type, and the like according to a material of the case accommodating the electrode assembly. Among these, a pouch-type secondary battery is prepared by performing a pressing process on a flexible pouch film laminate to form a cup part, accommodating the electrode assembly in the cup part and injecting an electrolyte, and then sealing a sealing part, and a can-type secondary battery is prepared by accommodating the electrode assembly in a can made of a metal material and injecting the electrolyte, and then assembling a top cap into the top portion of the can to be sealed.

The pouch-type secondary battery has the advantage of being light-weighted, excellent in space utilization, and achieving high energy density by using a stacked electrode assembly, but has the problem of being vulnerable to external impact, compared to the can-type secondary battery. Recently, as usage environment of the secondary battery becomes diverse, excellent safety, even in a harsh environment, has been required, and accordingly, improvement in impact resistance of the secondary battery has been required.

## DISCLOSURE OF THE INVENTION

## TECHNICAL PROBLEM

The present invention, which is to solve the above-described problem, relates to a lithium secondary battery in which the total pore volume of electrode assembly and the volume of electrolyte satisfy a particular condition, thereby minimizing electrolyte leakage when a battery case is damaged due to external impact, etc.

## TECHNICAL SOLUTION

According to an embodiment, the present invention provides a lithium secondary battery including an electrode assembly containing a positive electrode, a negative electrode, and a separator disposed between the positive electrode and the negative electrode; an electrolyte; and a battery case accommodating the electrode assembly and the electrolyte, and satisfying Expression (1) below.

$$\text{Expression (1): } V_p + 0.1 \times C/D_e \leq V_e \leq V_p + 0.15 \times C/D_e$$

In Expression (1) above, $V_e$ is a total volume (mL) of the electrolyte included in the lithium secondary battery, $V_p$ is a total pore volume (mL) of the electrode assembly, C is a battery capacity (Ah), and $D_e$ is an electrolyte density (g/mL).

The total pore volume $V_p$ of the electrode assembly may be the sum of a total pore volume of the positive electrode, a total pore volume of the negative electrode, and a total pore volume of the separator.

The battery capacity C may be a discharge capacity in a driving voltage range of the lithium secondary battery.

The battery case may be a pouch-type case.

Meanwhile, the battery case may be a pouch including a barrier layer, a substrate layer formed on one side of the barrier layer, and a sealant layer formed on the other side of the barrier layer, and including at least one cup part recessed in one direction, and the electrode assembly and the electrolyte may be accommodated in the cup part of the pouch.

In addition, the electrolyte may include an organic solvent and a lithium salt.

The organic solvent may include one or more selected from the group consisting of an ester-based solvent, an ether-based solvent, a ketone-based solvent, an aromatic hydrocarbon-based solvent, a carbonate-based solvent, an alcohol-based solvent, nitriles, amides, dioxolanes, and sulfolanes.

## ADVANTAGEOUS EFFECTS

When the total pore volume of an electrode assembly and the volume of an electrolyte satisfy a particular condition, like in the lithium secondary battery according to the present invention, electrolyte leakage may be minimized when a battery case is damaged, and also, lithium ions may move smoothly inside a battery, thereby providing a lithium secondary battery capable of achieving battery performance together with the reduction in electrolyte leakage.

## BRIEF DESCRIPTION OF THE DRAWINGS

FIG. 1 is an exploded perspective view of a lithium secondary battery according to an embodiment of the present invention.
FIG. 2 is a diagram illustrating the constitution of a pouch.
FIG. 3 is a graph showing the resistance increase rate of each of pouch-type lithium secondary batteries prepared according to Examples 1 and 2 and Comparative Examples 1, 3, and 6.
FIG. 4 is a graph showing the resistance increase rate of each of pouch-type lithium secondary batteries prepared according to Examples 3 and 4 and Comparative Examples 7 and 8.

## MODE FOR CARRYING OUT THE INVENTION

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

Hereinafter, the present invention will be described in more detail.

Recently, with increasing demand for a battery that requires high capacity such as a battery for an electric vehicle, the rated capacity of a secondary battery cell is increasing, and accordingly, the size and weight of an electrode assembly is on the rise. However, as the size and weight of the electrode assembly increase, damages on a battery case or a phenomenon of breaking though the battery case, due to the movement of the electrode assembly caused by external impact, are worsening. In particular, this problem occurs more seriously in the pouch-type battery having a battery case with low rigidity. When damage on the battery case occurs, the electrolyte may leak, and the leaked electrolyte may interfere with electrical structures inside a battery module, causing a short circuit. The short circuit of the battery module may cause deterioration in performance of the battery module, or may cause fire, so that even if the electrolyte leakage is suppressed, or once it starts, the amount of leakage needs to be minimized.

In order to reduce the amount of the electrolyte to be leaked when the battery case is damaged, it may be possible to consider a method of minimizing the excess amount of electrolyte injected, by limiting the amount of electrolyte injected into a battery cell to the amount capable of filling all pores in the electrode assembly, but in this case, the resistance of the battery cell increases, and therefore, the excess electrolyte injection in the appropriate level is being required.

The inventors repeatedly conducted researches to find out a method of minimizing the increase in resistance of a battery cell, and at the same time, minimizing electrolyte leakage when a battery case is damaged, and as a result, the inventors found out that, when the total volume of electrolyte in the battery satisfies a particular condition, together with the total pore volume of electrode assembly, the battery capacity, and the electrolyte density, the amount of electrolyte to be leaked, when the battery case is damaged, may be reduced as much as possible, and also the increase in resistance of the battery cell may be minimized, and therefore, the present invention has been completed.

A lithium secondary battery according to the present invention includes an electrode assembly containing a positive electrode, a negative electrode, and a separator disposed between the positive electrode and the negative electrode; an electrolyte; and a battery case accommodating the electrode assembly and the electrolyte, and satisfies Expression (1) below.

$$\text{Expression (1): } V_p + 0.1 \times C/D_e \leq V_e \leq V_p + 0.15 \times C/D_e$$

In Expression (1) above, $V_e$ is a total volume (mL) of the electrolyte included in the lithium secondary battery, $V_p$ is a total pore volume (mL) of the electrode assembly, C is a battery capacity (Ah), and $D_e$ is an electrolyte density (g/mL).

After the lithium secondary battery is prepared, and before formation, the total pore volume ($V_p$) of the electrode assembly is the sum of a total pore volume of the positive electrode, a total pore volume of the negative electrode, and a total pore volume of the separator, the battery capacity (C) is a discharge capacity in a driving voltage range of the secondary battery, and the volume $V_e$ of the electrolyte in the lithium secondary battery is a volume of the electrolyte injected to the secondary battery.

In addition, in case of the lithium secondary battery on which the formation has been performed, the total pore volume of the positive electrode, the total pore volume of the negative electrode, and the total pore volume of the separator, after the formation process, may each refer to a pore volume after the formation process, and the volume $V_e$ of electrolyte in the lithium secondary battery refers to the volume of the electrolyte remaining in the secondary battery after the formation process.

The total pore volume of the electrode assembly may be calculated on the basis of the pore volume values of components respectively constituting the positive electrode, the negative electrode, and the separator. In addition, the total pore volume of the electrode assembly after the formation is performed, may be calculated by adding the measured volumes of the positive electrode, the negative electrode, and the separator. The method of measuring the pore volume of the positive electrode, the pore volume of the negative electrode, and the pore volume of the separator is not particularly limited, and a generally used Brunauer-Emmett-Teller (BET) measurement using an absorbing gas, such as nitrogen, to measure the size (micro), the mesopore volume, and the like, or a generally used Hg porosimeter, may also be used.

When the total volume $V_e$ of the electrolyte, included in the lithium secondary battery, satisfies Expression (1) above, the increase in resistance of the battery cell may be minimized while the amount of leaked electrolyte may be significantly reduced when the battery case is damaged.

In particular, when the total volume $V_e$ of the electrolyte is less than a value of $[V_p+0.1\times C/D_e]$, the amount of electrolyte, remaining after impregnation in the pores of the electrode assembly, becomes too small, so that mobility of lithium ions may decrease, and when the total volume $V_e$ of the electrolyte is greater than a value of $[V_p+0.15\times C/D_e]$, the amount of electrolyte, remaining after impregnation in the pores of the electrode assembly, becomes too large, and the amount of leaked electrolyte may increase significantly when the battery case is damaged.

Meanwhile, if the density of the electrolyte is too high, the total electrolyte volume $V_e$ may have a smaller value than the value of $[V_p+0.1\times C/D_e]$, and may thus not satisfy Expression (1) above, and in this case, electrolyte impregnation may be reduced, thereby significantly increasing the battery resistance, and if the density of the electrolyte is too low, the total electrolyte volume $V_e$ has a larger value than the value of $[V_p+0.15\times C/D_e]$, and may thus not satisfy Expression (1) above, and in this case, the amount of leaked electrolyte may increase significantly when the battery case is damaged.

Meanwhile, the total pore volume $V_p$ of the electrode assembly may vary according to the types of the positive electrode, the negative electrode, and the separator, the size of the electrode assembly, the battery capacity, etc., and is not particularly limited. According to an embodiment, the total pore volume $V_p$ of the electrode assembly may be about 1 mL to 1000 mL, particularly about 10 mL to 500 mL, and more particularly about 50 mL to 250 mL.

In addition, the battery capacity C may refer to a discharge capacity of the battery in a driving voltage range, and is not particularly limited, but the battery capacity may be 50 Ah to 200 Ah, preferably 50 Ah to 150 Ah, and more preferably 60 Ah to 140 Ah. When the capacity C of the secondary battery falls within the above ranges, a secondary battery with high capacity may be achieved.

Meanwhile, the density of the electrolyte may be 1.0 g/mL to 1.4 g/mL, and particularly 1.1 g/mL to 1.3 g/mL. If the electrolyte density is too low, mobility of lithium ions may decrease, and the amount of leaked electrolyte may increase when cracks occur, and if the electrolyte density is too high, the impregnation may deteriorate, and thus, the battery performance may deteriorate.

According to an embodiment of the present invention, the total volume (mL) of electrolyte included in the lithium secondary battery may be, for example, a value in a range of 4.5 mL to 1030 mL, particularly 15 mL to 520 mL, and more particularly 55 mL to 270 mL.

Meanwhile, the secondary battery according to the present invention may be a pouch-type secondary battery. In this case, the battery case may be a pouch including, for example, a barrier layer, a substrate layer formed on one side of the barrier layer, and a sealant layer formed on the other side of the barrier layer, and including at least one cup part recessed in one direction, and the electrode assembly and the electrolyte may be accommodated in the cup part of the pouch.

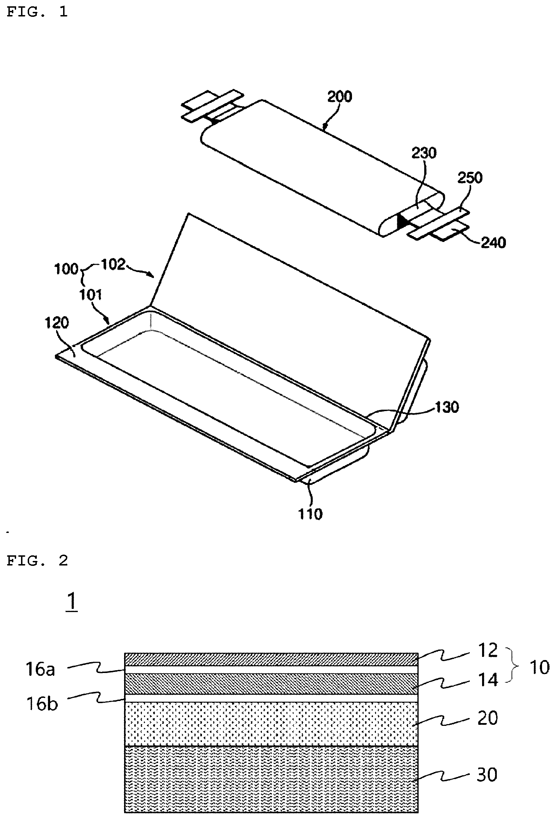

FIG. 1 is an exploded perspective view of a pouch-type lithium secondary battery, which is an embodiment of a secondary battery according to the present invention, and FIG. 2 is a drawing illustrating a cross section of a pouch film laminate. Hereinafter, with reference to the drawings, a lithium secondary battery according to an embodiment of the present invention will be described in more detail.

**Pouch**

The pouch 100 is a battery case for accommodating an electrode assembly and an electrolyte, which includes a barrier layer 20, a substrate layer 10 formed on one side of the barrier layer, and a sealant layer 30 formed on the other side of the barrier layer, and includes at least one cup part (accommodation part) that is recessed in one direction.

In particular, the pouch 100 may be prepared in a method of forming the cup part recessed in one direction by inserting a flexible pouch film laminate, having the substrate layer 10, the barrier layer 20, and the sealant layer 30 being laminated in sequence, into a press molding device, and by applying pressure to a partial region of the pouch film laminate by a punch to stretch the partial region.

## Substrate layer

The substrate layer 10 is disposed on the outermost layer of the pouch to protect the electrode assembly from external impact, and to electrically insulate the electrode assembly.

The substrate layer 10 may be made of a polymer material, which may be one or more polymer material selected from the group consisting of, for example, polyethylene, polypropylene, polycarbonate, polyethylene terephthalate, polyvinyl chloride, an acrylate-based polymer, polyacrylonitrile, polyimide, polyamide, cellulose, aramid, nylon, polyester, poly (p-phenylene benzobisoxazole), polyarylate, and TEFLON.

The substrate layer 10 may have a single-layer structure, and as illustrated in FIG. 2, the substrate layer 10 may also have a multi-layer structure in which different polymer films 12 and 14 are laminated. In a case where the substrate layer 10 has a multi-layer structure, an adhesion layer 16a may be disposed between the polymer films.

Meanwhile, the substrate layer 10 may have a total thickness of 10 $\mu$m to 60 $\mu$m, particularly of 20 $\mu$m to 50 $\mu$m, and more particularly of 30 $\mu$m to 40 $\mu$m. In the case where the substrate layer has the multi-layer structure, the thickness is a thickness including the adhesion layer. When the substrate layer 10 falls within the above range, durability, insulation, and moldability are excellent. When the thickness of the substrate layer is too small, the durability may decrease, and damage on the substrate layer may occur in a molding process, and when the thickness is too large, the moldability may decrease, and the total thickness of the pouch may increase, thereby reducing a space for accommodating a battery, and decreasing the energy density.

According to an embodiment, the substrate layer 10 may have a laminated structure of a polyethylene terephtalate (PET) film and a nylon film. At this time, it is preferable that the nylon film is disposed on the barrier layer 20 side, that is, disposed on the inner side, and the polyethylene terephthalate film is disposed on the surface side of the pouch.

Polyethylene terephthalate (PET) is excellent in durability and electrical insulation, and therefore, when the PET film is disposed on the surface side, durability and insulation becomes excellent. However, the PET film has a weak adhesiveness with an aluminum alloy thin film, constituting the barrier layer 20, and has a different stretching behavior therefrom, so that if the PET film is disposed on the barrier layer side, separation of the substrate layer and the barrier layer may occur during a molding process, and uneven stretching of the barrier layer may cause a problem of decreased moldability. In comparison, the nylon film has a similar stretching behavior with the aluminum alloy thin film constituting the barrier layer 20, and therefore, in case of disposing the nylon film between the polyethylene terephthalate and the barrier layer, effect of improving the moldability may be achieved.

The polyethylene terephthalate film may have a thickness of 5 $\mu$m to 20 $\mu$m, particularly, 5 $\mu$m to 15 $\mu$m, and more particularly, 7 $\mu$m to 15 $\mu$m, and the nylon film may have a thickness of 10 $\mu$m to 40 $\mu$m, particularly, 10 $\mu$m to 30 $\mu$m, and more particularly 15 $\mu$m to 25 $\mu$m. When the thicknesses of the polyethylene terephthalate film and the nylon film fall within the above ranges, respectively, excellent moldability and rigidity after the molding are exhibited.

## Barrier layer

The barrier layer 20 serves to secure mechanical strength of the pouch 100, block access of gas, moisture, or the like in the outside of a secondary battery, and prevent electrolyte leakage.

The barrier layer 20 may have a thickness of 30 $\mu$m to 100 $\mu$m, particularly of 35 $\mu$m to 80 $\mu$m, and more preferably of 40 $\mu$m to 80 $\mu$m. When the thickness of the barrier layer falls within the above ranges, the moldability is improved, increasing the molding depth of a cup part, or occurrence of cracks and/or pinholes is reduced even in a 2-cup molding, thereby improving the resistance to external stress after the molding.

Meanwhile, the barrier layer 20 may be made of a metal material, and particularly, made of an aluminum alloy thin film.

The aluminum alloy thin film may include aluminum, and a metal element other than the aluminum, for example, one, or two or more selected from the group consisting of iron (Fe), copper (Cu), chrome (Cr), manganese (Mn), nickel (Ni), magnesium (Mg), silicon (Si), and zinc (Zn).

Preferably, the aluminum alloy thin film may include iron (Fe) in an amount of 1.2 wt% to 1.7 wt%, preferably 1.3 wt% to 1.7 wt%, and more preferably 1.3 wt% to 1.45 wt%. When the amount of iron (Fe) in the aluminum alloy thin film falls within the above ranges, occurrence of cracks or pinholes may be minimized even if the cup part is formed to be deep.

## Sealant layer

The sealant layer 30 is bonded through thermocompression to seal the pouch, and is positioned on the innermost layer of the pouch film laminate 1.

The sealant layer 30 is a surface to be in contact with the electrolyte and the electrode assembly after the pouch is molded, and thus is required to have insulation and corrosion resistance, and since the movement of substances between inside and outside needs to be blocked by sealing the inside completely, high sealing quality is required.

The sealant layer 30 may be made of a polymer material, which may include one or more selected from the group consisting of, for example, polyethylene, polypropylene, polycarbonate, polyethylene terephthalate, polyvinyl chloride, an acrylate-based polymer, polyacrylonitrile, polyimide, polyamide, cellulose, aramid, nylon, polyester, poly(p-phenylene benzobisoxazole), polyarylate, and TEFLON, and among these, polypropylene (PP) which is excellent in mechanical property such as tensile strength, rigidity, surface hardness, wear resistance, and heat resistance, and excellent in chemical property such as corrosion resistance may be included.

More particularly, the sealant layer 30 may include polypropylene, cast polypropylene (CPP), acid modified polypropylene, a polypropylene-butylene-ethylene copolymer, or a combination thereof.

The sealant layer 30 may have a single-layer structure, and may also have a multi-layer structure including two or more layers of different polymer materials.

The sealant layer may have a total thickness of 60 $\mu$m to 100 $\mu$m, particularly of 60 $\mu$m to 90 $\mu$m, and more particularly of 70 $\mu$m to 90 $\mu$m. When the thickness of the sealant layer is too small, sealing durability and insulation may be reduced, and when the thickness is too large, flexibility may be reduced, and the total thickness of the pouch film laminate may increase, causing reduction in energy density, compared to volume.

The pouch film laminate 1 may be prepared in a preparation method of a pouch film laminate widely known to the relevant art. For example, the pouch film laminate may be prepared in a method that the substrate layer 10 is bonded to an upper surface of the barrier layer 20 through an adhesive, and the sealant layer 30 is formed on a lower surface of the barrier layer 20 through coextrusion or an adhesive, but the method is not limited thereto.

The pouch 100 is prepared by inserting the above-described pouch film laminate into a molding device and applying pressure to a partial region of the pouch film laminate by a punch to form a cup part. At this time, the pressure may be about 0.3 MPa to 1 MPa, particularly about 0.3 MPa to 0.8 MPa, and more particularly about 0.4 MPa to 0.6 MPa. During the molding of the cup part, if the pressure is too low, wrinkles may occur due to excessive drawing, if the pressure is too high, the molding depth may be reduced since the drawing is not done well.

Meanwhile, the moving speed of the punch may be 20 mm/min to 80 mm/min, particularly 30 mm/min to 70 mm/min, and more particularly 40 mm/min to 60 mm/min. If the pressure is too low or the moving speed of the punch is too high during the molding, wrinkles may occur due to buckling, and if the pressure is too high or the moving speed of the punch is too low during the molding, the stress concentrated in a corner of the cup part, during the molding, may increase, so that the occurrence of pinholes or cracks may be increased.

The pouch 100 of the present invention, prepared in the above-described method, includes a lower case 101, an upper case 102, and a folding part 130 connecting the lower case and the lower case, and the upper case and/or lower case includes a cup part 110 that is recessed in one direction.

In particular, the pouch 100 according to the present invention may have a 1-cup form where the cup part 110 is formed only in the lower case 101 as illustrated in FIG. 1, but an embodiment of the present invention is not limited thereto, and the pouch 100 may have a 2-cup form where the cup part is formed both in the upper case and the lower case. The 2-cup pouch may accommodate a thicker electrode assembly than the 1-cup pouch because, after the electrode assembly and the electrolyte are accommodated, the upper case is folded such that the cup part of the upper case and the cup part of the lower case face each other, and accordingly, it is advantageous for achieving high energy density.

The cup part 110 has an accommodating space for accommodating the electrode assembly 200. Meanwhile, the pouch 100 may include a terrace 120 around the cup part 110. The terrace 120 refers to a portion of the pouch film laminate that is not molded, that is, the remaining region excluding the cup part 110. The terrace 120 is a portion that is sealed through heat sealing in a sealing process, after the electrode assembly 200 is accommodated in the cup part 110 and the electrolyte is injected.

The cup part 110 may include a bottom surface and a perimeter surface. The perimeter surface may connect the bottom surface to the terrace 120. The perimeter surface may be included in plurality, and more particularly, four perimeter surfaces may be included. The bottom surface may cover one side of the electrode assembly 200, and the perimeter surface may surround the circumference of the electrode assembly 200.

Meanwhile, the folding part 130 may connect the lower case 101 to the upper case 102, and after the electrode assembly 200 is accommodated in the cup part 110, and the electrolyte is injected, the folding part 130 is folded such that the upper case 102 seals the cup part 110 of the lower case 101. In case of including the folding part 130, the lower case 101 and the upper case 102 are integrally connected, so that the number of sides to be sealed is reduced in the following sealing process, which has effect of improving processibility.

The folding part 130 may be spaced apart from the cup part 110, and the distance between the folding part 130 and the cup part 110 may be about 0.5 mm to 3 mm, and preferably about 0.5 mm to 2 mm. If the folding part 130 is too close to the cup part 110, folding may not be performed smoothly, and if the folding part 130 is too far from the cup part 110, the total volume of a secondary battery may increase, and thus, the energy density may decrease, compared to the volume. In case of the 2-cup case, the folding part may be formed to satisfy the above distance for each cup part.

## Electrode Assembly

The electrode assembly 200 may include a plurality of electrodes and a plurality of separators alternately stacked. The plurality of electrodes may be alternately stacked with the separator therebetween, and may include a positive electrode and a negative electrode having opposite polarities.

In addition, a plurality of electrode tabs 230, welded to each other, may be included in the electrode assembly 200. The plurality of electrode tabs 230 may be connected to the plurality of electrodes, and protrude from the electrode assembly 200 to the outside and function as a movement path of electrons between the inside and outside of the electrode assembly 200. The plurality of electrode tabs 230 may be positioned inside the pouch 100.

The electrode tab 230 connected to the positive electrode and the electrode tab 230 connected to the negative electrode may protrude in different directions with respect to the electrode assembly 200. However, an embodiment of the present invention is not limited thereto, and the electrode tab 230 connected to the positive electrode and the electrode tab 230 connected to the negative electrode may also protrude side-by-side in the same direction.

A lead 240 providing electricity to the outside of the secondary battery may be connected to the plurality of electrode tabs 230 by a spot welding, etc. One end of the lead 240 may be connected to the plurality of electrode tabs 230, and the other end may protrude toward the outside of the pouch 100.

A portion of the lead 240 may be surrounded by an insulation part 250. For example, the insulation part 250 may include an insulating tape. The insulation part 250 may be positioned between the terrace 120 of the first case 101 and the second case 102, and in this state, the terrace 120 and the second case 102 may be heat-sealed to each other. In this case, the terrace 120 and a portion of the second case 102 may be heat-sealed with the insulation part 250. Therefore, the insulation part 250 may prevent the electricity, generated from the electrode assembly 200, from flowing to the pouch 100 through the lead 240, and the sealing of the pouch 100 may be maintained.

Meanwhile, according to the present invention, a ratio of overall length to overall width of the electrode assembly 200 may be 5 to 10, and preferably 5 to 8. When the ratio of the overall length to the overall width falls within the above range, high energy density in a limited space may be achieved.

For example, the overall length of the electrode assembly may be 300 mm to 600 mm, and the overall width may be 50 to 150 mm, and particularly, the overall length may be 500 mm to 600 mm, and the overall width may be 50 mm to 100 mm.

## Electrolyte

The electrolyte serves to move lithium ions generated by electrochemical reaction of an electrode, during charging and discharging of a secondary battery, and may include an organic solvent and a lithium salt.

Any organic solvent may be used as the organic solvent without particular limitation as long as it may function as a medium through which ions, involved in an electrochemical reaction of the battery, may move.

The organic solvent may include at least one selected from the group consisting of an ester-based solvent, an ether-based solvent, a ketone-based solvent, an aromatic hydrocarbon-based solvent, a carbonate-based solvent, an alcohol-based solvent, nitriles, amides, dioxolanes, and sulfolanes. In particular, as the organic solvent, an ester-based solvent including methyl acetate, ethyl acetate, $\gamma$-butyrolactone, $\varepsilon$-caprolactone, etc.; an ether-based solvent including dibutyl ether, tetrahydrofuran, etc.; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), methylethylcarbonate (MEC), ethylmethylcarbonate (EMC), ethylene carbonate (EC), propylene carbonate (PC), etc.; an alcohol-based solvent including ethyl alcohol, isopropyl alcohol, etc.; nitriles including R-CN (where R is a linear, branched, or cyclic C2 to C20 hydrocarbon group, and may include a double-bond aromatic ring or an ether bond), etc.; amides including dimethylformamide, etc.; dioxolanes including 1,3-dioxolane, etc.; or sulfolanes may be used. Among these, the carbonate-based solvent is preferred, and a mixture of a cyclic carbonate (for example, ethylene carbonate, propylene carbonate, or the like) having high ionic conductivity and high dielectric constant capable of increasing charging and discharging performance of a battery, and a low-viscosity linear carbonate-based compound (for example, ethylmethyl carbonate, dimethyl carbonate, diethyl carbonate, or the like) is more preferred.

Any compound capable of providing lithium ions that are used in a lithium secondary battery may be used for the lithium salt without particular limitation. In particular, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used as the lithium salt. The lithium salt may be used in a concentration range of 0.1 to 5.0 M, and preferably of 0.1 to 3.0 M. When the concentration of lithium salt falls within the above range, the electrolyte may have appropriate conductivity and viscosity, and therefore, excellent performance of the electrolyte may be exhibited, and lithium ions may move effectively.

In addition to the above-described electrolyte components, an additive may be additionally included in the electrolyte for the purpose of improving lifetime characteristics of a battery, suppressing reduction of battery capacity, improving a discharge capacity of the battery, etc. At least one additive, for example, a halo-alkylene carbonate-based compound such as difluoro ethylene carbonate, pyridine, triethylphosphite, triethanolamine, cyclic ether, ethylene diamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, or the like may also be further included as the additive. At this time, the additive may be included in an amount of 0.1 to 5 parts by weight on the basis of 100 parts by weight total weight of the electrolyte.

Hereinafter, the present invention is described in more detail through particular examples.

**Example 1**

A pouch, in which nylon/ polyethylene terephthalate/ an Al alloy thin film/ polypropylene were sequentially laminated and a cup part was molded, was prepared.

In addition, an organic solvent having a composition of ethylene carbonate (EC): propylene carbonate (PC): diethyl carbonate (DEC) in a volume ratio of 3:2:5, and $LiPF_6$ with 1.0 M were added to prepare a non-aqueous electrolyte. The prepared non-aqueous electrolyte has a density of 1.2 g/mL.

A positive electrode active material ($LiNi_{0.9}Co_{0.06}Mn_{0.03}Al_{0.01}O_2$), a carbon nanotube, and a PVDF binder were mixed in N-methylpyrrolidone in a weight ratio of 97.8: 0.6: 1.6 to prepare a positive electrode slurry. The positive electrode slurry was applied to one side of an aluminum current collector sheet, then dried at 120 °C, and then pressed to prepare a positive electrode.

A negative electrode active material (graphite), a conductive material (super C), a styrene-butadiene rubber (SBR), and carboxymethyl cellulose (CMC) were mixed in water in a weight ratio of 96: 2: 1.5: 0.5 to prepare a negative electrode slurry. The negative electrode slurry was applied to one side of a copper current collector sheet, then dried at 150 °C, and then pressed to prepare a negative electrode.

The positive electrode, the negative electrode, and a porous polyethylene separator were assembled in a stacking method, and then laminated to prepare an electrode assembly with a battery capacity of 66 Ah.

The electrode assembly with a total pore volume of 116 mL was accommodated in the cup part, then the electrolyte was injected in 121.5 mL and then sealed, and formation was performed by charging in full at 4.2 V and then discharging in full with 0.3 C to 2.5 V.

**Example 2**

A pouch-type lithium secondary battery was prepared in the same method as that of Example 1 above, except that the electrolyte was injected in 124.2 mL.

**Example 3**

A pouch-type lithium secondary battery was prepared in the same method as that of Example 1 above, except that the electrode assembly with a battery capacity of 72 Ah and a total pore volume of 128 mL was prepared in the method described in Example 1, and the electrolyte was injected in 134.7 mL.

**Example 4**

A pouch-type lithium secondary battery was prepared in the same method as that of Example 3 above, except that the electrolyte was injected in 137.1 mL.

**Comparative Example 1**

A pouch-type lithium secondary battery was prepared in the same method as that of Example 1 above, except that the electrolyte was injected in 115.9 mL.

**Comparative Example 2**

A pouch-type lithium secondary battery was prepared in the same method as that of Example 1 above, except that the electrolyte was injected in 127.0 mL.

**Comparative Example 3**

A pouch-type lithium secondary battery was prepared in the same method as that of Example 1 above, except that the electrolyte was injected in 129.8 mL.

**Comparative Example 4**

A pouch-type lithium secondary battery was prepared in the same method as that of Example 1 above, except that the electrolyte was injected in 132.6 mL.

**Comparative Example 5**

A pouch-type lithium secondary battery was prepared in the same method as that of Example 1 above, except that the electrolyte was injected int 138.2 mL.

**Comparative Example 6**

A pouch-type lithium secondary battery was prepared in the same method as that of Example 1 above, except that the electrolyte was injected in 118.8 mL.

**Comparative Example 7**

A pouch-type lithium secondary battery was prepared in the same method as that of Example 3 above, except that the electrolyte was injected int 128.1 mL.

**Comparative Example 8**

A pouch-type lithium secondary battery was prepared in the same method as that of Example 3 above, except that the electrolyte was injected in 140.1 mL.

**Experimental Example** 1: **Measurement** of **Battery Capacity and Amount of Leakage**

The lithium secondary battery prepared according to each of Examples 1 to 4 and Comparative Examples 1 to 8 was charged in a CC/CV mode with 0.2 C constant current (CC) to 4.25 V at 25 °C (0.05 C cut-off), then left to rest for 20 minutes, and then discharged in a CC mode with 0.2 C constant current (CC) to 2.5 V, and a discharge capacity was measured. At this time, 1C = 200 mA/g was set.
After this, a crack in a size of about 1 cm x 2 mm was formed on the outer surface of the pouch in the pouch-type lithium secondary battery prepared according to each of Examples 1 to 4 and Comparative Examples 1 to 8.
Each of the pouch-type lithium secondary batteries was placed in a tray with the crack formed in the pouch facing downwards, then left to rest for 60 minutes, and then the amount of leaked electrolyte was measured.
The results, together with whether Expression 1 below is satisfied, were listed in Table 1 and Table 2.

$$\text{Expression (1): } V_p + 0.1 \times C/D_e \leq V_e \leq V_p + 0.15 \times C/D_e$$

In Expression (1) above, $V_e$ is a total volume (mL) of the electrolyte included in the lithium secondary battery, $V_p$ is a total pore volume (mL) of electrode assembly, C is a battery capacity (Ah), and $D_e$ is an electrolyte density (g/mL).

[Table 1]

| Classificati on | Total pore volume of electro de assembl y (mL) | Battery capacit y (Ah) | Electro lyte Density (g/mL) | Total volume of electro lyte injecte d (mL) | Amount of leakage (mL) | Whether Express ion 1 is satisfi ed |
|---|---|---|---|---|---|---|
| Example 1 | 116 | 66 | 1.2 | 121.5 | 0.01 | O |

(continued)

| Classificati on | Total pore volume of electro de assembl y (mL) | Battery capacit y (Ah) | Electro lyte Density (g/mL) | Total volume of electro lyte injecte d (mL) | Amount of leakage (mL) | Whether Express ion 1 is satisfi ed |
|---|---|---|---|---|---|---|
| Example 2 | 116 | 66 | 1.2 | 124.2 | 0.03 | O |
| Comparative Example 1 | 116 | 66 | 1.2 | 115.9 | 0.0 | X |
| Comparative Example 2 | 116 | 66 | 1.2 | 127.0 | 0.4 | X |
| Comparative Example 3 | 116 | 66 | 1.2 | 129.8 | 1.5 | X |
| Comparative Example 4 | 116 | 66 | 1.2 | 132.6 | 2.2 | X |
| Comparative Example 5 | 116 | 66 | 1.2 | 138.2 | 4.2 | X |
| Comparative Example 6 | 116 | 66 | 1.2 | 118.8 | 0.0 | X |

```
Value of Expression (1): 121.5 ≤ Vₑ ≤ 124.25
```

[Table 2]

| Classificati on | Total pore volume of electro de assembl y (mL) | Battery capacit y (Ah) | Electro lyte Density (g/mL) | Total volume of electro lyte injecte d (mL) | Amount of leakage (mL) | Whether Express ion 1 is satisfi ed |
|---|---|---|---|---|---|---|
| Example 3 | 128 | 72 | 1.2 | 134.7 | 0.09 | O |
| Example 4 | 128 | 72 | 1.2 | 137.0 | 0.14 | O |
| Comparative Example 7 | 128 | 72 | 1.2 | 128.1 | 0.0 | X |
| Comparative Example 8 | 128 | 72 | 1.2 | 140.1 | 0.68 | X |

```
Value of Expression (1): 134 ≤ Vₑ ≤ 137
```

**Experimental Example 2: Measurement of Increase Rate of Cycle Resistance**

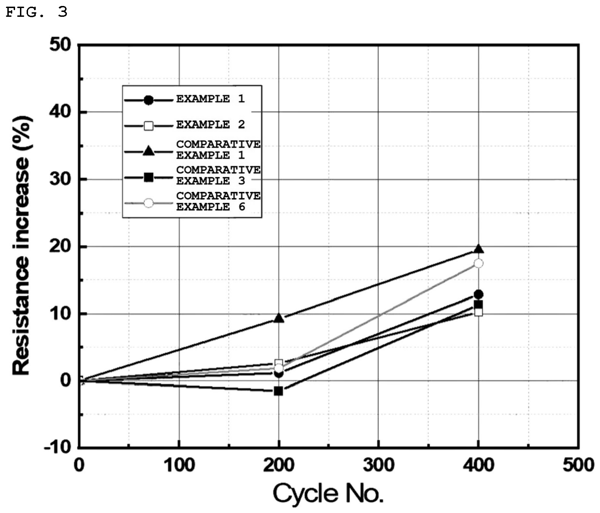

The pouch-type lithium secondary battery prepared according to each of Examples 1 and 2 and Comparative Examples 1, 3 and 6 was charged in a CC/CV mode with 0.5 C constant current (CC) to 4.25 V at 45 °C (0.05 C cut-off), then left to rest for 20 minutes, and then discharged in a CC mode with 1.0 C constant current (CC) to 2.5 V. While the charging and discharging was repeated 400 times, the resistance was measured at the 200th cycle and the 400th cycle to calculate the increase rate of resistance relative to the initial resistance. The results were listed in FIG 3.

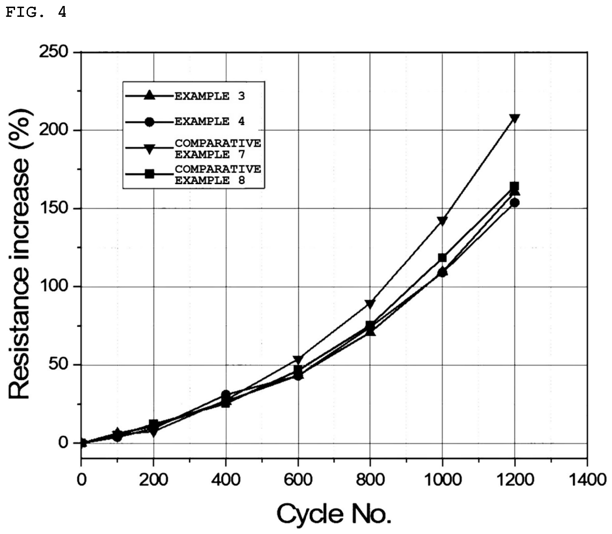

In addition, 1200 cycles of charging and discharging were performed on the pouch-type lithium secondary battery prepared according to each of Examples 3 and 4 and Comparative Examples 7 and 8 in the same method as above, and the resistance was measured at 100th, 200th, 400th, 600th, 800th, 1000th, and 1200th cycles to calculate the increase rate of resistance relative to the initial resistance. The results were listed in FIG 4.

Referring to Table 1 above, it can be seen that, when the pouch according to each of Examples 1 and 2 had cracks, the amount of leaked electrolyte significantly decreased, compared to Comparative Examples 2 to 5. In addition, compared to Example 1 and Example 2 where the amount of leaked electrolyte had a difference by 0.02 mL for a difference by 2.7 mL in the total volume of electrolyte, in Example 2 and Comparative Example 2, the amount of leaked electrolyte had a difference by 0.37 mL for a difference by 2.8 mL in the total volume of electrolyte (13.3 times), exhibiting significantly increased amount of leaked electrolyte, and through this, it can be seen that, when the volume of additional electrolyte to be injected in the preparation of the lithium secondary battery falls within a certain range, the amount of leaked electrolyte may be significantly reduced even when a battery case is damaged. Likewise, as shown in Table 2 above, through comparisons of Examples 3 and 4 and Example 4 and Comparative Example 8, it can be also seen that, according to Comparative Example 8, significantly increased amount of leaked electrolyte was exhibited, compared to the increased amount of the total volume of electrolyte.

Meanwhile, in Comparative Example 1 where an additional electrolyte was not injected, the electrolyte leakage did not occur even when the battery case was damaged, but as shown in FIG. 3, the increase rate of resistance, due to increase in cycle, was shown significantly high, which was clearly distinguished from Examples 1 and 2 and Comparative Example 3, where the additional electrolyte was injected, and relatively low increase rates of resistance were exhibited.

In addition, in case of Comparative Examples 6 and 7 where an additional electrolyte was injected in small amounts, even when the battery case was damaged, the electrolyte leakage did not occur, but as shown in FIGS. 3 and 4, it can be seen that the increase rate of resistance, caused by the increase in cycle, was shown significantly high. In each of Comparative Examples 6 and 7, even though the electrolyte in a volume capable of filling the total pores of the electrode assembly was injected, high increase rate of resistance was exhibited. Through this, even in the case where the electrolyte in a volume higher than the total pore volume of the electrode assembly was injected, it can be seen that, when the volume of the additionally-injected electrolyte was not sufficient, so that Expression (1) was not satisfied, the increase rate of resistance, caused by the increase in cycle, may be significantly increased.

Through this experiment, it can be seen that, when the electrolyte in a volume satisfying Expression (1) is injected, the lithium secondary battery capable of minimizing the electrolyte leakage upon damage of the battery case as well as exhibiting excellent cycle characteristics.

**Claims**

1. A lithium secondary battery comprising:

    an electrode assembly including a positive electrode, a negative electrode, and a separator disposed between the positive electrode and the negative electrode;
    an electrolyte; and
    a battery case accommodating the electrode assembly and the electrolyte, and
    satisfying Expression (1) below:

$$\text{Expression (1): } V_p + 0.1 \times C/D_e \leq V_e \leq V_p + 0.15 \times C/D_e$$

    wherein, in Expression (1) above, $V_e$ is a total volume (mL) of the electrolyte included in the lithium secondary battery, Vp is a total pore volume (mL) of the electrode assembly, C is a battery capacity (Ah), and $D_e$ is an electrolyte density (g/mL).

2. The lithium secondary battery of claim 1, wherein the total pore volume $V_p$ of the electrode assembly is a sum of a total pore volume of the positive electrode, a total pore volume of the negative electrode, and a total pore volume of the separator.

3. The lithium secondary battery of claim 1, wherein the total pore volume $V_p$ of the electrode assembly is 1 mL to 1,000 mL.

4. The lithium secondary battery of claim 1, wherein the battery capacity C is a discharge capacity of the secondary battery in a driving voltage range.

5. The lithium secondary battery of claim 1, wherein the battery capacity C is 50 Ah to 200 Ah.

6. The lithium secondary battery of claim 1, wherein the electrolyte density $D_e$ is 1.0 g/mL to 1.4 g/mL.

7. The lithium secondary battery of claim 1, wherein the battery case is a pouch-type case.

8. The lithium secondary battery of claim 1, wherein the battery case is a pouch comprising a barrier layer, a substrate layer formed on one side of the barrier layer, and a sealant layer formed on the other side of the barrier layer, and comprising at least one cup part that is recessed in one direction, and
    the electrode assembly and the electrolyte are accommodated in the cup part of the pouch.

9. The lithium secondary battery of claim 1, wherein the electrolyte comprises an organic solvent and a lithium salt.

10. The lithium secondary battery of claim 9, wherein the organic solvent comprises one or more selected from the group consisting of an ester-based solvent, an ether-based solvent, a ketone-based solvent, an aromatic hydrocarbon-based solvent, a carbonate-based solvent, an alcohol-based solvent, nitriles, amides, dioxolanes, and sulfolanes.

**FIG. 1**

**FIG. 2**

<u>1</u>

FIG. 3

FIG. 4

## INTERNATIONAL SEARCH REPORT

| International application No. |
| --- |
| **PCT/KR2024/014655** |

**A. CLASSIFICATION OF SUBJECT MATTER**

**H01M 10/052**(2010.01)i; **H01M 50/105**(2021.01)i; **H01M 50/126**(2021.01)i; **H01M 10/0566**(2010.01)i

According to International Patent Classification (IPC) or to both national classification and IPC

**B. FIELDS SEARCHED**

Minimum documentation searched (classification system followed by classification symbols)

H01M 10/052(2010.01); H01M 10/0525(2010.01); H01M 10/0567(2010.01); H01M 10/40(2006.01); H01M 10/42(2006.01); H01M 2/10(2006.01); H01M 2/14(2006.01); H01M 4/02(2006.01); H01M 50/133(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 케이스(case), 전해질(electrolyte), 부피(volume), 공극(pore), 전지 용량(battery capacity), 밀도(density)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0038747 A (CONTEMPORARY AMPEREX TECHNOLOGY CO., LIMITED) 29 March 2022 (2022-03-29)<br>See claims 1, 4 and 5; and table 2. | 1-10 |
| A | WO 2018-179897 A1 (PANASONIC INTELLECTUAL PROPERTY MANAGEMENT CO., LTD.) 04 October 2018 (2018-10-04)<br>See claims 1-8. | 1-10 |
| A | KR 10-2016-0081899 A (SONY CORPORATION) 08 July 2016 (2016-07-08)<br>See claims 1-23. | 1-10 |
| A | KR 10-2016-0143830 A (TOYOTA JIDOSHA KABUSHIKI KAISHA) 14 December 2016 (2016-12-14)<br>See claims 1-6. | 1-10 |
| A | JP 2002-270225 A (MATSUSHITA ELECTRIC IND. CO., LTD.) 20 September 2002 (2002-09-20)<br>See claims 1-7. | 1-10 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 January 2025** | **09 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/014655**

| Patent document cited in search report | | | Publication date (day/month/year) | Patent family member(s) | | | Publication date (day/month/year) |
|---|---|---|---|---|---|---|---|
| KR | 10-2022-0038747 | A | 29 March 2022 | CN | 112582596 | A | 30 March 2021 |
| | | | | CN | 112582596 | B | 15 October 2021 |
| | | | | EP | 3958362 | A1 | 23 February 2022 |
| | | | | JP | 2022-536811 | A | 18 August 2022 |
| | | | | JP | 7216869 | B2 | 01 February 2023 |
| | | | | KR | 10-2503954 | B1 | 28 February 2023 |
| | | | | US | 11658294 | B2 | 23 May 2023 |
| | | | | US | 2022-0102714 | A1 | 31 March 2022 |
| | | | | WO | 2021-057483 | A1 | 01 April 2021 |
| WO | 2018-179897 | A1 | 04 October 2018 | CN | 110366794 | A | 22 October 2019 |
| | | | | CN | 110366794 | B | 04 March 2022 |
| | | | | JP | 2020-179897 | A1 | 06 February 2020 |
| | | | | JP | 6865379 | B2 | 28 April 2021 |
| | | | | US | 11245148 | B2 | 08 February 2022 |
| | | | | US | 2020-0144560 | A1 | 07 May 2020 |
| KR | 10-2016-0081899 | A | 08 July 2016 | CN | 105659411 | A | 08 June 2016 |
| | | | | CN | 105659411 | B | 13 September 2019 |
| | | | | JP | 2015-111553 | A | 18 June 2015 |
| | | | | JP | 6442966 | B2 | 26 December 2018 |
| | | | | KR | 10-2118241 | B1 | 02 June 2020 |
| | | | | US | 2016-0172657 | A1 | 16 June 2016 |
| | | | | WO | 2015-064051 | A1 | 07 May 2015 |
| KR | 10-2016-0143830 | A | 14 December 2016 | CN | 106463690 | A | 22 February 2017 |
| | | | | CN | 106463690 | B | 11 June 2019 |
| | | | | JP | 2015-220119 | A | 07 December 2015 |
| | | | | JP | 6233649 | B2 | 22 November 2017 |
| | | | | KR | 10-1918644 | B1 | 15 November 2018 |
| | | | | US | 10014514 | B2 | 03 July 2018 |
| | | | | US | 2017-0077486 | A1 | 16 March 2017 |
| | | | | WO | 2015-177617 | A1 | 26 November 2015 |
| JP | 2002-270225 | A | 20 September 2002 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230129853